Europäisches Patentamt

**European Patent Office**

Office européen des brevets

(19)

(11) Veröffentlichungsnummer: **0 085 384**
**B1**

(12) **EUROPÄISCHE PATENTSCHRIFT**

(45) Veröffentlichungstag der Patentschrift:
**23.04.86**

(21) Anmeldenummer: **83100636.6**

(22) Anmeldetag: **25.01.83**

(51) Int. Cl.⁴: **B 63 B 7/04**, B 63 B 35/86

(54) **Klappboot mit einer Bug- und einer Hecksektion.**

(30) Priorität: **29.01.82 DE 3202885**

(43) Veröffentlichungstag der Anmeldung:
**10.08.83 Patentblatt 83/32**

(45) Bekanntmachung des Hinweises auf die Patenterteilung:
**23.04.86 Patentblatt 86/17**

(84) Benannte Vertragsstaaten:
**AT BE CH DE FR GB IT LI LU NL SE**

(56) Entgegenhaltungen:
**FR - A - 2 250 663**
**FR - A - 2 355 709**
**FR - A - 2 395 184**
**FR - A - 2 465 603**
**GB - A - 430 188**
**GB - A - 1 472 535**
**GB - A - 2 013 584**
**US - A - 3 173 160**
**US - A - 3 226 738**
**US - A - 4 025 010**
**US - A - 4 048 685**

(73) Patentinhaber: **Carabo AG, Burgstrasse 28, Glarus (CH)**

(72) Erfinder: **Holzbaur, Siegfried, Am Merseberg 30,
D-6430 Bad Hersfeld (DE)**

(74) Vertreter: **Berkenfeld, Helmut, Dipl.-Ing., An der
Schanz 2, D-5000 Köln 60 (DE)**

ACTORUM AG

## Beschreibung

Die Erfindung betrifft ein Klappboot mit einer Bug- und einer Hecksektion, von denen eine Sektion als Schwenkteil mittels einer Klappachse über die andere als Fahrzeugteil dienende und für den Überlandverkehr mit einem Fahrwerk ausstattbare Sektion klappbar ist, wobei das Klappboot mindestens in zusammengeklapptem Zustand des Bootes einen umschlossenen Raum mit dem Schwenkteil als Dach aufweist.

Ein Klappboot dieser Gattung ist bekannt (FR-A- 2 250 663). Bei diesem bekannten Klappboot werden die beiden Sektionen zum Erreichen des schwimmfähigen Zustandes auseinander- und zum Transport über Land zusammengeklappt. Im auseinandergeklappten Zustand werden die Bug- und die Hecksektion mit einer Zeltplane überdacht. Diese bietet dann einen, wenn auch begrenzten Schutz vor den Unbilden der Witterung. Vor dem Zusammenklappen der beiden Sektionen wird die Zeltplane abgenommen. Im zusammengeklappten Zustand bilden die beiden dann übereinanderliegenden Sektionen einen niedrigen Kasten. Dieser lässt sich leicht auf einen Bootsanhänger aufsetzen. Zum Vereinfachen des Transportes auf diesem Anhänger und zum Vereinfachen des Ziehens des Anhängers mit einem Kraftfahrzeug hat der durch die Sektionen gebildete Kasten eine nur niedrige Bauhöhe. In dem von ihm umschlossenen Raum lassen sich nur Bootsteile, wie zum Beispiel Paddel, Ruder, Benzinkanister und dergleichen unterbringen. Für einen Aufenthaltsraum ist der Kasten zu niedrig und auch nicht hierfür bestimmt. Die beiden Sektionen weisen Stirnwände auf. Im auseinandergeklappten Zustand liegen sie mittschiffs und sind dann einander zugekehrt. Beim Gang von der Bug- in die Hecksektion und umgekehrt muss man über sie herübersteigen. Für Kinder sind die Stirnwände sogar so hoch, dass sie diese überklettern müssen. Das bekannte Klappboot dient dem Zweck, im auseinandergeklappten, schwimmfähigen Zustand einen mit einer Zeltplane überdeckbaren Aufenthaltsraum zu bilden, während es im zusammengeklappten Zustand zum Transport über Land möglichst niedrig sein soll.

Bekannt ist ein Dingi (GB-A- 2 013 584) aus einer Bug- und einer Hecksektion. Sie sind über Gelenke miteinander verbunden. Zum Erreichen des schwimmfähigen Zustandes werden sie auseinander- und zum Transport über Land zusammengeklappt. Die im auseinandergeklappten Zustand einander zugekehrten Stirnseiten der beiden Sektionen sind offen. Im zusammengeklappten Zustand werden diese beiden Stirnseiten, die nun übereinanderliegen, mit einer lösbaren Platte verschlossen. Damit ergibt sich innerhalb der beiden zusammengeklappten Sektionen ein nach aussen abgeschlossener Stauraum. Wie beim eingangs erläuterten Klappboot eignet sich dieser Stauraum wegen seiner niedrigen Höhe nur zum Unterbringen von Bootsteilen.

Von diesem Stand der Technik ausgehend liegt der Erfindung die Aufgabe zugrunde, ein Klappboot der eingangs genannten Gattung so auszubilden, dass es im zusammengeklappten Zustand seiner beiden Sektionen ein Wohnmobil mit hohem Wohnwagenkomfort und im auseinandergeklappten Zustand seiner beiden Sektionen ein Boot mit sowohl witterungssicherer Unterbringung seiner Fahrgäste als auch mit guten Bootseigenschaften bildet. Die Lösung für diese Aufgabe ergibt sich bei einem Klappboot der eingangs genannten Gattung nach der Erfindung dadurch, dass die Bug- und Hecksektion im zusammengeklappten Zustand einen Raum von der Grösse eines Wohn- und Schlafraumes umschliessen, die sich durch die Teilungsebene des Bootes ergebenden Flächen von Fahrzeugteil und Schwenkteil die rückseitige Stirnwand des Raumes bilden und dass in dieser Stirnwand ein Eingang für den Raum angeordnet ist.

Bug- und Hecksektion des erfindungsgemässen Klappboots weisen demnach solche Abmessungen und eine solche Form auf, dass sie im zusammengeklappten Zustand nicht nur einen Kasten zur Unterbringung von Bootsteilen, sondern einen Raum mit ausreichender Stehhöhe von der Grösse eines Wohn- und eines Schlafraumes umschliessen. Damit kann das erfindungsgemässe Klappboot im zusammengeklappten Zustand seiner beiden Sektionen als Wohnwagen verwendet werden. Damit entfällt für den Bootseigner die Notwendigkeit, zum Aufenthalt auf dem Land und zur Übernachtung nach einer Unterkunft, wie einem Hotel, zu suchen und dies zu bezahlen, oder bei seinen Wanderfahrten zusätzlich zu seinem Boot auch ein Wohnmobil mitzuführen. Bei einer Fahrt über Land führt er das Klappboot im zusammengeklappten Zustand seiner Sektionen auf einem Anhänger hinter seinem Kraftfahrzeug mit sich. Auf einem Campingplatz und/oder an einem See- oder Flussufer kann er das Klappboot in diesem Zustand wie ein Wohnmobil als Unterkunfts- und Schlafraum benutzen. Dieser Raum lässt sich durch den in seiner rückseitigen Stirnwand erfindungsgemäss vorgesehenen Eingang einfach betreten und verlassen. Damit entfällt die Notwendigkeit, in einer Seitenwand eine besondere Türöffnung anzuordnen. Deren Konstruktion würde grosse Schwierigkeiten bereiten. Eine solche Türöffnung würde nicht nur die Festigkeit herabsetzen, sondern auch für den Schwimmzustand bei auseinandergeklappten Sektionen abgedichtet werden müssen. Im auseinandergeklappten Zustand liegt diese Stirnwand in der Teilungsebene des Bootes zwischen dessen beiden Sektionen. Der in der Stirnwand erfindungsgemässe Eingang ermöglicht dann einen einfachen Übergang vom Bug- und Heckraum und umgekehrt. Während man bei dem eingangs erläuterten bekannten Klappboot hierzu über die in der Teilungsebene und damit mittschiffs liegenden Stirnwände der Bug- und der Hecksektion hinübersteigen oder sogar hinüberklettern musste, ergibt sich erfindungsgemäss ein einfacher, fast stufenloser Übergang zwischen Bug und Heck. Im auseinandergeklappten Zustand seiner beiden Sektionen und damit im Schwimmzustand weist das erfindungsgemässe Klappboot Schwimmeigenschaften auf, die mit denen normaler Boote gleicher Grösse vergleichbar oder gleich sind.

Das erfindungsgemässe Klappboot mit den kennzeichnenden Merkmalen des Hauptanspruchs hat demgegenüber den Vorteil, dass bei einem verhältnismässig geringen Aufwand an Gewicht für das Dach des im Fahrzeugteil befindlichen Raumes trotzdem eine einbruchsichere Hartschale durch den Schwenkteil erreicht wird, solange das Boot auf Land und zusammengeklappt ist. Auf Wasser ist eine derartige Hartschale nicht erforderlich, sondern lediglich eine Spritzwasser und Regen abweisende Haut. Ein besonderer Vorteil ist, dass über die in der rückseitigen Stirnwand angeordnete Tür in ausgeklapptem Zustand eine bequeme Verbindung zwischen den Sektionen besteht, die gegebenenfalls verschliessbar ist und dass in zusammengeklapptem Zustand eine Haupteingangstür für den Wohnwagen besteht. Zudem bietet die gradflächige Stirnwand optimale Voraussetzungen für einen Türeinbau. Der Raum kann somit unabhängig von der jeweiligen Benutzungsart eingerichtet und abgeschlossen werden. Der Aufbau auf dem Fahrzeugteil kann jedoch auch äusserst stabil, beispielsweise in glasfaserverstärktem Kunststoff, vorgenommen werden, so dass er auch für sich beispielsweise bei aufgeklapptem Aufstellen auf einem Campingplatz ausreichend gegen Einbruch stabil ist. Hierdurch ergibt sich ein Mobil für Freizeit, Urlaub, Reise und Sport, bei dem ein hoher Wohnwagenkomfort möglich ist, verbunden mit hervorragenden Fahreigenschaften, Handlichkeit, zudem guten Bootseigenschaften und damit grosser Flexibilität zu Land und zu Wasser. Die persönlichen Gegenstände können ohne Diebstahlsgefahr durch den Wohnwagenraum eingeschlossen werden und es bestehen gleichzeitig für einen Liegeplatz des Bootes im Winter keine Probleme. Das Betreten des Fahrzeugteilraumes über die der quer zur Fahrtrichtung vorgesehene Tür ist zudem gefahrlos.

Nach einer Ausgestaltung der Erfindung ist die Höhe der Rumpfschale des Fahrzeugteils höher als die des Schwenkteils. Hierdurch wird einerseits das Schwenkteil so leicht wie möglich gehalten und damit auch die mechanische Arbeit beim Schwenken minimiert. Andererseits dient das Schwenkteil dann lediglich als «zweites Dach in eingeklapptem Zustand», so dass die beim Schwenkteil mit gewissem Abstand angeordnete Reling auf den Bord des Fahrzeugteils zu liegen kommt. Der Bereich zwischen Reling und Schwenkteilschale kann lichtdurchlässig gehalten werden, so dass die im Fahrzeugteil vorgesehenen Fenster auch in zusammengeklapptem Zustand ausreichend Licht erhalten.

Die Schwelle der stirnseitig angeordneten Tür muss oberhalb des Wasserspiegels angeordnet sein, dass über den Trennspalt zwischen Vorder- und Hintersektion des Klappbootes kein Wasser in den Wohnwagenraum gelangt. Hierdurch ist, wenn das Fahrzeug auf der Strasse steht, eine verhältnismässig grosse Höhe zu überwinden. Erfindungsgemäss kann hierfür eine Leiter mit Parallelogrammverstellung verwendet werden, die andererseits, wenn das Boot im Wasser in ausgeklapptem Zustand fährt, als Bordleiter dient. In ausgeklapptem Zustand ist nämlich die Schwelle problemlos überschreitbar.

Ob die Hecksektion oder die Bugsektion als Schwenkteil dient, ist weitgehend zweckgebunden, wobei jedoch jede der Möglichkeiten ihre speziellen eigenen Vorteile hat. So bringt eine höhere Belastung des Buges, wenn diese Sektion als Fahrzeugteil ausgeführt ist, Vorteile beim normalen Motorshippern. Umgekehrt ist für den Segelbetrieb angestrebt, dass die Hecksektion schwerer ist und somit als Fahrzeugteil dient. Bei Segelbetrieb wird durch das Segel über den Mast ein zusätzliches Moment auf die Bugsektion übertragen, so dass eine schwerere Hecksektion bezüglich der Längsachse des Bootes ausgleichend wirkt.

Erfindungsgemäss kann auf dem Schwenkteil in ausgeklapptem Zustand des Bootes ein Aufbau montiert werden. So kann der Aufbau ein Dach in Form eines Kajütdaches haben, das zur Reling bzw. dem Bord des Schwenkteils eine Verbindung aufweist. Hierdurch entsteht ein zusätzlicher Raum, ähnlich wie das Vorzelt eines Wohnwagens. Als Füllteile zwischen dem möglicherweise durch Stützen abgestützten Kajütdach und der Reling bzw. der Reling und der Sektionsschale können zeltartig Tücher gespannt sein. Gemäss einer Ausgestaltung der Erfindung weist das Aufbaudach eine dem Dach des Fahrzeugteils angepasste Form auf, ist in zugeklapptem Zustand des Bootes zwischen Fahrzeugteildach und Bootsschale des Schwenkteils angeordnet und ist – nachdem das Boot aufgeklappt ist – nach Anheben um 180 Grad in seine das Schwenkteil überdeckende Lage schwenkbar. Hierdurch wird einerseits erreicht, dass das Aufbaudach beim Strassentransport «aufgeräumt» ist und andererseits ein sehr stabiles Dach mit wenig Kraft aufbaubar ist. Zum Anheben dient ein das Dach parallel zu seiner Lage höhenverstellendes Parallelogramm, das auf der einen Befestigungsseite (Aufbaudach oder Fahrzeugteildach) ein Drehscharnier für die Horizontalschwenkung aufweist. Durch das Parallelogramm ist es zudem möglich, das Aufbaudach je nach Schwenklage des Parallelogramms mehr oder weniger weit über das Schwenkteil ragen zu lassen.

Gemäss einer anderen Ausgestaltung der Erfindung ist im Fahrzeugteildach eine Cockpitöffnung mit einem durch eine Vorrichtung in verschiedene Lagen verstellbaren Deckel vorgesehen, wobei die Verstellvorrichtung mit einer Kurbel arbeitet, deren Achsen in Rohren feststellbar sind, die mit dem Fahrzeugdach bzw. mit dem Deckel verbunden sind, so dass der Deckel bezüglich des Daches angehoben, mit oder gegen die Fahrtrichtung schräg gestellt, seitlich verschoben oder flach nach hinten weggeklappt werden kann. Diese Cockpitöffnung ist vorteilhafterweise auf der Seite des Fahrzeugdaches angeordnet, die dem zur Anlegung dienenden Bord zugewandt ist. Unter der Cockpitöffnung ist ein Steuerstand vorgesehen, so dass der Shipper bequem beim Steuern die jeweilige Situation übersehen kann. Das Cockpitdach kann über die Dachkante heruntergezogen sein und mit seinem senkrechten Abschnitt gleichzeitig als Verriegelungsmittel für eine Tür in der Bordwand dienen. Hierdurch kann der Shipper beim Anlegen auf kürzestem Weg vom Ruder her nach aussen gelangen, um beispielsweise das Boot festzutäuen.

Gemäss einer anderen vorteilhaften Ausgestaltung der Erfindung können für die Landbeförderung zweierlei Vorrichtungen für das Fahrwerk gewählt werden. Die eine Vorrichtung sieht ein Einziehen der Räder in Radkästen vor, so dass die Lager nicht mehr vom Wasser, insbesondere Salzwasser, umströmt werden und wobei die Räder nicht hindernd am Aussenbord sind. Die erforderlichen Radkästen dienen innerhalb der «Wohnwagenkajüte» als Sitz- oder Liegegelegenheit. Vorteilhafterweise kann der Radkasten auf die ganze Länge des Bootes durchgezogen werden, um damit einen Strömungstunnel in Längsrichtung unter jeder Seite des Bootes zur zusätzlichen Fahrstabilität zu erhalten. Die Radschwenkbewegung kann an die Bootsklappbewegung gekoppelt sein, so dass die Räder beim Ausklappen des Schwenkteils gleichzeitig eingefahren werden oder zum Einfahren freigegeben und vorgespannt werden. Die andere mögliche Art des Landtransportes erfolgt über ein der Form des Bootes angepasstes Fahrgestell mit Rädern und Deichsel, von dem das Boot dann leicht ins Wasser gleiten kann, wenn der Schwenkteil bereits ausgeschwenkt und mindestens teilweise im Wasser liegt.

Ab einer gewissen Bootsgrösse ist auch dieses Zuwasserbringen nicht ohne Schwierigkeiten möglich. Besonders schwierig ist es, danach das Boot wieder aus dem Wasser auf das Fahrgestell zu ziehen. Das Hauptproblem liegt hierbei in der Schwerpunktänderung, die sich beim Ausklappen des Bootes ergibt. Das Fahrgestell ist nämlich auf den Schwerpunkt des zusammengeklappten Bootes ausgerichtet. Gemäss einer erfinderisch selbständigen Ausgestaltung ist in Bezug auf den Schwerpunkt des ausgeklappten Bootes ein Hilfsfahrwerk am Fahrzeugteil angeordnet, das ebenfalls ausschwenkbar ist und auf das das Gewicht des gesamten Bootes nach Ausklappen verlagerbar ist. Mittels dieses Hilfsfahrwerks kann bei einschwenkbarem Fahrgestell das Fahrgestell eingeschwenkt werden, bevor das Boot gewässert wird, oder bei Booten mit separatem Fahrgestell kann dieses dann leicht abgezogen werden. Das Hilfsfahrwerk hat auch den Vorteil, dass beispielsweise bei aufkommendem Unwetter das Boot an irgendeiner Stelle aus dem Wasser und auf dem Hilfsfahrwerk an Land geschoben werden kann. Durch die Verwendung einer Laufkette oder eines Laufbandes anstatt von Rädern bei dem Hilfsfahrwerk kann dieses Einsinken in weiche Böden, wie beispielsweise Sandboden, vermieden werden. Dieses Hilfsfahrwerk kann in den Radkasten einschwenkbar sein. Dieses Betätigen kann über eine Kurbel von ausserhalb des Bootes an Land oder von innerhalb des Bootes im Wasser erfolgen. Das Rollwerk kann sehr einfach und insbesondere wasserwiderstandsfähig ausgebildet sein (einfache Gleitlager), da es nicht für höhere Geschwindigkeiten auf der Strasse vorgesehen ist.

Nach einer anderen Ausgestaltung der Erfindung wird durch die Strömungskanäle der Rumpf des Klappbootes zu einem Trimaran. Zudem kann der Bug des mittleren Rumpfes (Hauptrumpfes) einen sich in Fahrtrichtung ausdehnenden wellenunterschneidenden Wulst aufweisen. Der von vorhandenen Wellen unterspülbare Teil bleibt dadurch relativ gering und auch der Heckteil taucht nicht unerwünscht tief ins Wasser. Die Stützrümpfe können eine bestimmte Breite aufweisen und vorteilhafterweise an dem Hauptrumpf demontierbar befestigt sein. Hierdurch können einerseits die Seitenrümpfe als Nutzbehälter dienen und andererseits aufgrund der wasserverdrängenden Breite echte Stützwirkung erzeugen. Dadurch, dass das Boot aufgrund des Wulstbuges weitgehend in der ursprünglichen Längsneigung bleibt, bildet sich im Strömungstunnel eine Wassersäule, deren Relativgeschwindigkeit geringer ist als die äussere Geschwindigkeit zwischen Wasser und Boot. Ab einer bestimmten Geschwindigkeit wirkt dieser Tunnel wie ein Bootskörper, wodurch das Boot insgesamt aus dem Wasser herausgehoben wird und somit eine geringere Verdrängung aufweist, die zu einem entsprechend geringeren Fahrtwiderstand führt. Dies kann bei gewissen Geschwindigkeiten bis zu einer Gleitfunktion führen. Aufgrund wiederum des Wulstbuges und der beibehaltenen Schiffsneigung bleibt die Schiffsschraube dazu konstant in einem optimalen Eingriff, der von vornherein festlegbar ist.

Nach einer anderen Ausgestaltung der Erfindung ist der Bootsmotor mittschiffs angeordnet und damit vorteilhafter Weise auch in zusammengeklapptem Zustand des Klappbootes stirnseitig zugänglich, ohne dass dadurch während des Betriebs in ausgeklapptem Zustand des Bootes behindernde, über die Bordwand herausragende Teile, wie beispielsweise bei einem Aussenbordmotor, vorhanden sind. Der Motor ist somit in zusammengeklapptem oder ausgeklapptem Zustand des Bootes voll zugänglich. Dieses kann beispielsweise beim Auswechseln der Schraube während des Schiffsbetriebs von grosser Bedeutung sein. Der Motor wird lediglich nach oben gezogen und die Schraube ausgetauscht. Zudem ist ein Boot mit mittschiffs angeordnetem Motor (Schraube) wesentlich manövrierfähiger, beispielsweise durch An- und Ablegen unmittelbar quer zur eigentlichen Fahrtrichtung. Durch Anordnen der Schiffsschraube noch innerhalb eines Bodentunnels kann zusätzlich erreicht werden, dass das Boot auch in äusserst flachen Gewässern ohne Gefahr für die Schiffsschraube fahren kann. Als Bodentunnel kann erfindungsgemäss eine mindestens im Fahrzeugteil angeordnete Kanalmulde dienen, die gleichzeitig als Radkasten zur Aufnahme der Fahrwerke dient. Da zwei derartige Kanalmulden vorhanden sind, können entsprechend auch zwei Schiffsschrauben verwendet werden, beispielsweise unter Antrieb durch einen Motor. Auch ist es möglich, auf einfache Weise als schraubentreibenden Motor statt einer Verbrennungskraftmaschine einen Elektromotor zu verwenden. Über ein Notstromaggregat kann beispielsweise der erforderliche Strom erzeugt werden, der in einer Batterie dann gespeichert an den Elektromotor abgegeben wird. Eine derartige Version macht das Boot von irgendwelchen besonderen Vorschriften für manche Gewässer unabhängig, indem dann einfach der Motor getauscht wird. Die Höhenverstellbarkeit des Motors und damit die Tauchtiefe der Schraube kann dann besonders vorteilhaft sein, wenn in tieferen Gewässern die Schraube entsprechend tief eingetaucht wird, um damit die hydrodynamischen Verhältnisse zwischen durch die Schraube erzeugten Strömungen und am Schiffsrumpf sich ergebenden Strömungen zu optimieren. Auch die Anordnung an der Rückseite der Stirnwand bei ausgeklapptem Zustand des Bootes mitten im Boot ist besonders dann wenig störend, wenn ein Verkleidungskasten gewählt wird, der gleichzeitig als Tisch mit einem etwas erhöhten Rand dient. Die Stirnwand kann ausserdem zur Aufnahme eines Werkzeugkastens dienen, der möglicherweise klappbar an der Wand befestigt ist, so dass wiederum in beiden Klappstellungen ein voller Zugang gegeben ist. In einem derartigen Kasten können auch andere Gegenstände(die zum Aufbaudach gehören) untergebracht werden.

Eine weitere Ausgestaltung der Erfindung ist die Verwendung eines die Massen ausgleichenden Federsystems beim Schwenken, so dass auch eine relativ schwache Person den sehr schweren Schenkteil allein kippen kann. Neben einer ganzen Reihe bekannter Kraftausgleichssysteme (häufig verwendet bei Garagentoren) bietet sich hier ein Servo-System auf der Basis von Gasoder sonstigen Federn an. Das ganze System kann günstig an den Innenseiten der Bordwände untergebracht werden, da die Hauptangriffspunkte an den Bordwänden sind.

Ein derartiges Klappboot lässt sich äusserst vielseitig verwenden, wobei entsprechend auch eine vielseitige Ausgestaltungsmöglichkeit der Einzelteile gegeben ist. Erfindungsgemäss kann deshalb für den jeweiligen Zweck eine Modulbauweise gewählt werden, indem diese Module, beispielsweise Küchenzeile, Steuerstand, Duschkabine usw., baukastenmässig zusammensetzbar und durch andere Module ersetzbar sind. So kann auch, je nach Verwendungszweck des erfinderischen Klappboots, der Bug oder das Heck als Schwenkteil dienen und es kann eines der Teile entsprechend verlängert werden, um dadurch eine Gesamtverlängerung zu erhalten. Bei einer derartigen Verlängerung würde der Schwenkteil nicht mehr den ganzen Fahrzeugteil überdecken.

Zeichnung

Zwei Ausführungsbeispiele des Gegenstandes der Erfindung sind in der Zeichnung dargestellt und werden im folgenden näher beschrieben. Es zeigen:

Fig. 1 das erfinderische Prinzip an dem ersten Beispiel, bei dem die Hecksektion über den Wohnwagenteil geklappt wird, im Längsschnitt und in verschiedenen Schwenkstellungen;

Fig. 2 das erste Ausführungsbeispiel in Aussenansicht mit Heckaufbau, Transportwagen und Hilfsfahrwerk;

Fig. 3 einen Schnitt gemäss der Linie III-III in Fig. 2;

Fig. 4 die vereinfachte Darstellung der Kräfte speichernden Kippvorrichtung;

Fig. 5 das Prinzip des einziehbaren Fahrwerks;

Fig. 6 ein Ausführungsbeispiel für ein einziehbares Fahrwerk;

Fig. 7 und 8 die Anordnung des Motors;

Fig. 9 und 10 das zweite Ausführungsbeispiel mit überklappbarem Bug;

Fig. 11 das zweite Ausführungsbeispiel als Segelboot getakelt;

Fig. 12 das erste Ausführungsbeispiel in perspektivischer Ansicht mit Aufbaudach und Cockpit;

Fig. 13 das Aufbaudach in verschiedenen Stellungen und

Fig. 14 das Cockpitdach in verschiedenen Stellungen.

Beschreibung der Erfindungsbeispiele

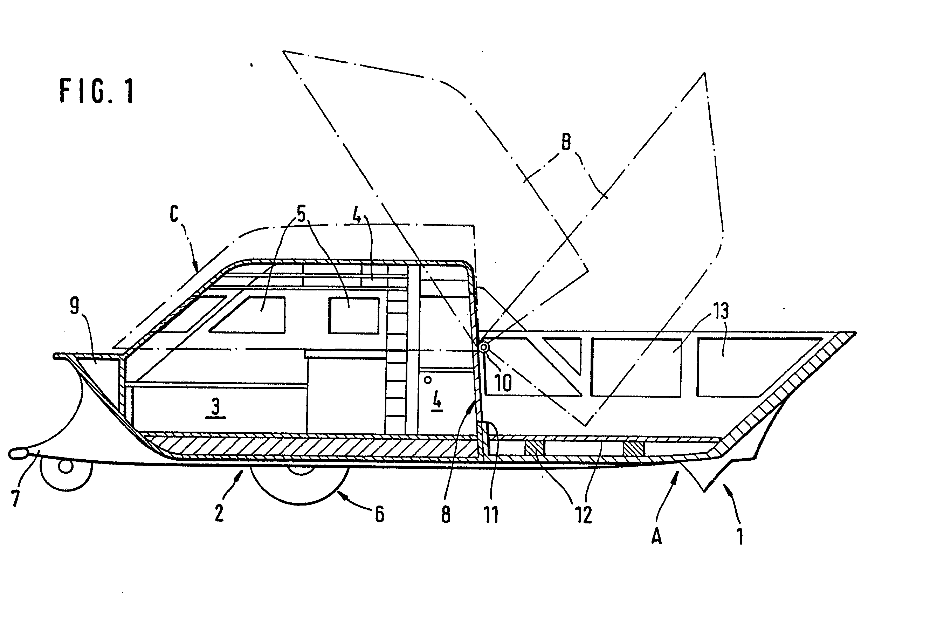

In Fig. 1 ist das Prinzip des erfinderischen Klappbootes anhand eines ersten Ausführungsbeispieles dargestellt, bei dem die Hecksektion 1 des Bootes über die als Wohnwagen ausgestaltete Bugsektion 2 geklappt wird. Wie aus diesem Längsschnitt ersichtlich, ist die Sektion 2 als kompletter Wohnwagen gestaltet und ausgebaut mit Sitzen 3, Schränken 4 und Fenstern 5 sowie all' den sonst bei derartigen Wohnwagen nach Wunsch des Benutzers verwendeten Teilen. Für den Überlandverkehr ist an diesem Wohnwagen ein Fahrwerk mit Rädern 6 vorgesehen sowie eine Deichsel 7, mit der der Wohnwagen an eine Zugmaschine, beispielsweise einen Pkw koppelbar ist. Der Wohnwagen hat auf der der Deichsel 7 abgewandten Seite eine Eingangstür 8 und oberhalb der Deichsel einen Stauraum 9, in dem beispielsweise eine Elektrowinde sowie sonstiges Transportmaterial untergebracht werden kann.

Mit diesem Wohnwagenteil 2, der als Fahrzeugteil dient, ist um ein Gelenk 10 schwenkbar die Hecksektion 1 als Schwenkteil verbunden. In der Stellung A ist das Schwenkteil voll ausgeklappt, so dass sich die beiden Stirnwände von Schwenkteil 1 und Fahrzeugteil 2 berühren. An beiden Teilen ist die für die Tür 8 erforderliche Aussparung an der jeweiligen Stirnwand bis zu einer Schwelle 11 heruntergezogen, die jedoch oberhalb des Wasserspiegels liegt. Da in diesem Berührungsbereich kein Wellengang herrscht, sondern lediglich der statische durch den Spalt zwischen den Stirnwänden eindringende Druck, gelangt auch kein Wasser in den Bootsraum. Um den Boden des Bootes zu begradigen und auch für Sammelwassermengen einen Kielraum zu haben, ist ein Lattenrost 12 vorgesehen. Mit B sind verschiedene Schwenkstellungen dieses Schwenkteiles 1 gezeigt. In der Stellung C ist das Schwenkteil 1 voll über das Fahrzeugteil 2 geklappt, wodurch ein zusätzlicher Schutz gegen äussere Einflüsse entsteht. Dieser zusätzliche Schutz ist nicht nur gegen Einbrüche von Vorteil, sondern vor allem gegen Witterungseinflüsse. Wenn beispielsweise das Klappboot im Winter abgestellt wird, bildet das Heckteil 1 einen hervorragenden Schutz gegen Schnee und Regen. Dieses Teil ist ohnehin besonders wasserwiderstandsfähig ausgebildet. Dadurch hat der Klappbootersteller die Möglichkeit, den Wohnwagenaufbau auf dem Fahrzeugteil aus leichteren und empfindlicheren Materialien zu machen. Um auch in zusammengeklapptem Zustand ausreichend Licht im Wohnwagen zu haben, sind im Schwenkteil 1 Öffnungen 13 oder lichtdurchlässige Platten eingebaut, die in zusammengeklapptem Zustand gerade den Fenstern 5 gegenüberliegen. Diese Öffnungen 13 liegen in aufgeklapptem Zustand nach Wässerung des Bootes erheblich über dem Wasserspiegel, so dass auch hier kein unmittelbarer statischer Wasserdruck anstehen würde und können mit Zeltstoffen geschlossen werden.

Das Eintreten in einen Wohnwagen von der hinteren Stirnseite hat wesentliche Vorteile. Erstens kann man auch in enge Lücken zwischen andere Wagen den Wohnwagen abstellen, ohne dass die Gefahr besteht, dass beim Öffnen der Türen die anderen Fahrzeuge beschädigt werden. Andererseits ist es vorteilhaft, wenn man beim Aussteigen nicht auf die Fahrbahn stösst. Durch die Gestaltung des hydrodynamischen Heckteiles bildet dieses im zusammengeklappten Zustand des Bootes eine aerodynamische Form. Hierdurch wird das Notwendige zum Praktischen, Vorteilhaften. In ausgeklapptem Zustand, als Boot, ist eine Kajüte vorhanden, in der ein für Wohnwagen ausgefuchster Komfort besteht und aus der unmittelbar in den hinteren Teil des Bootes gegangen werden kann. Selbst bei einem Ausklappen auf Land und einem entsprechenden Unterlegen des Schwenkteiles 1 bzw. ein Angekoppeltseinlassen an die Zugmaschine, ergibt sich eine erhebliche Vergrösserung der geschützten Nutzungsfläche, nämlich vom Fahrzeugteil zu der Gesamtfläche Fahrzeugteil und Schwenkteil. Die aus hydrodynamischen Gründen bedingte Verjüngung des Fahrzeugteils auf der Zugmaschinenseite bringt nicht nur aerodynamische Vorteile, sondern erleichtert auch das Rangieren mit dem Fahrzeugteil bzw. das Fahren von sehr engen Radien.

Natürlich kann die rückseitige Stirnwand des Fahrzeugteils gegenüber der Klappebene zurückgesetzt sein. Dies ist lediglich eine Frage der vorteilhaften Konstruktion, insbesondere der maximalen Ausnutzung des zur Verfügung stehenden Raums. So kann auch der Fahrzeugteil länger ausgebildet sein, so dass der Schwenkteil nur einen kleineren Teil des Fahrzeugteils überdeckt.

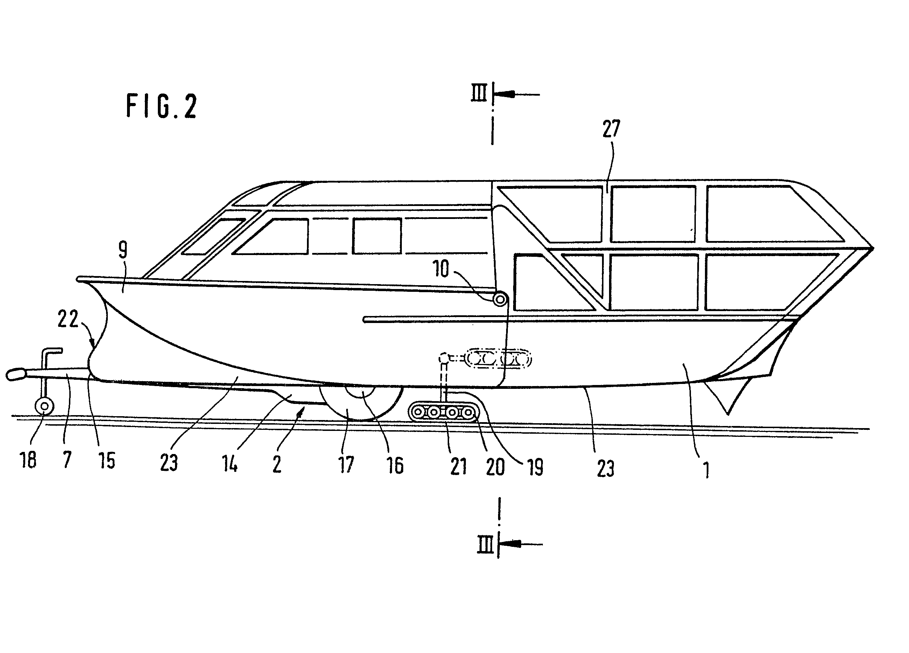

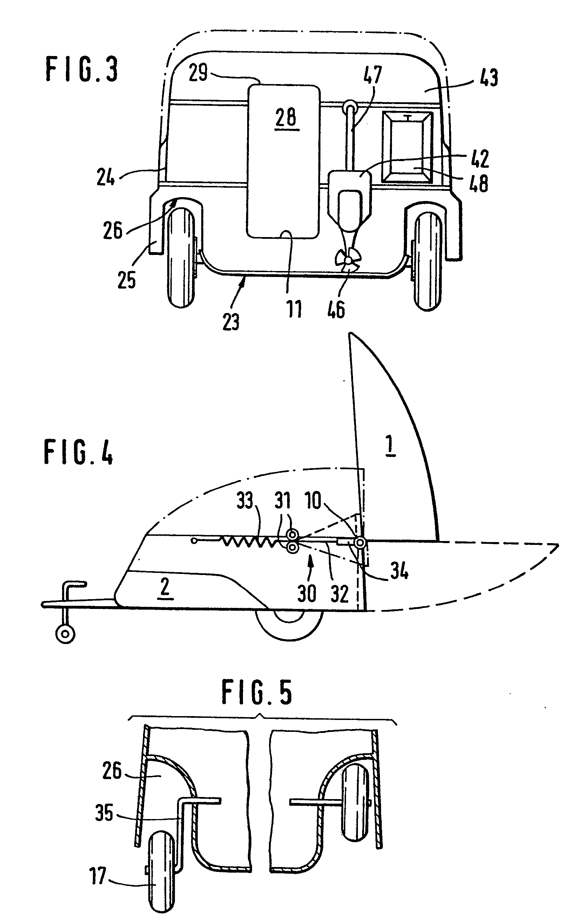

In Fig. 2 ist das erste Ausführungsbeispiel in der Aussenansicht dargestellt; in Fig. 3 ein Schnitt gemäss der Linie III-III aus Fig. 2. Das Klappboot ist hier in ausgeklapptem Zustand dargestellt. Das Fahrzeugteil 2 ist auf einem Anhängerwagen 14 aufgelegt und bei 15 an diesem lösbar befestigt. Die Achse 16 der Räder 17 ist kurz hinter dem Schwerpunkt des zusammengeklappten Klappbootes angeordnet.

Hierdurch ergibt sich im Strassenverkehr eine leichte Neigung zur Deichsel 7 bzw. einem Stützrad 18 hin. Um das Herausziehen des Anhängers 14 zu erleichtern, kann am Fahrzeugteil ein Hilfsfahrwerk 19 vorgesehen werden, was in etwa an dem Schwerpunkt des Klappbootes angreift, der sich ergibt, wenn es in ausgeklapptem Zustand ist, und der entsprechend weiter hinten am Fahrzeugteil ist. Dieses Hilfsfahrwerk 19 ist, wie gestrichelt dargestellt, einschwenkbar und gegen Wasser unempfindlich, was insbesondere bei Salzwasser eine grosse Rolle spielt. Beispielsweise ist das Hilfsfahrwerk 19 hier mit Rollen 20 ausgestattet, um die eine Kette oder ein Band 21 angeordnet ist. Hierdurch wird verhindert, dass bei weichem Boden, insbesondere nassem Boden, das Hilfsfahrwerk zu tief einsinkt. Dieses Hilfsfahrwerk 19 kann auch dann herausgeschwenkt und benutzt werden, wenn aufgrund irgendwelcher Umstände das Boot an Land gezogen werden muss. Hierfür kann zusätzlich die im Bugstauraum 9 untergebrachte Seilwinde dienen. Sobald das Hilfsfahrwerk 19 ausgeschenkt ist, kann der Kippunkt vom Rad 17 zum Rollensystem 20, 21 verlagert werden, so dass nach Auskoppeln der Deichsel 7 der entlastete Anhänger 14 vom Fahrzeugteil 2 gelöst und unter diesem herausgezogen werden kann. Einer der wesentlichsten Vorteile ist jedoch die Unempfindlichkeit gegen Wasser, insbesondere Salzwasser, was bei den hochempfindlichen Lagern von Strassenfahrzeugen verheerende Auswirkungen hätte und weshalb sich bisher auch Amphibienfahrzeuge nicht durchsetzen konnten. Das Hilfsfahrwerk kann von ausserhalb des Bootes, z.B. auf Land, und innerhalb des Bootes, z.B. wenn es im Wasser ist, betätigt werden.

Der Schiffsrumpf weist aus hydrodynamischen Gründen unter Wasser einen nach vorne gezogenen Bug 22 auf. Um die Wasserverdrängung während des Betriebs besonders strömungsgünstig zu gestalten, geht dieser wellenunterschneidende Wulstbug 22 in einen kielförmigen Mittelteil 23 über. Wie in Verbindung mit Fig. 3 ersichtlich, sind die Seitenwände 24, insbesondere des Fahrzeugteils seitlich weitgehend heruntergezogen, so dass sich zwischen den dadurch gebildeten Schürzen 25 und dem Kiel 3 Kanalmulden 26 (Strömungskanäle) ergeben, die einerseits erheblich zu einer Stabilität gegen Kentern beitragen und andererseits zur Aufnahme des Hilfsfahrwerks bzw. als Radkasten der Räder 17 dienen. Diese Schürzen 25 können vorteilhafterweise Hohlräume aufweisen, die als Behälter für Kraftstoff oder sonstige Flüssigkeiten dienen.

Je nach Bedarf ist es möglich, auf dem Heck des Bootes, nämlich dem Schwenkteil 1 einen Aufbau 27 vorzusehen, der als Leichtaufbau zweckmässig gestaltet auch verhältnismässig leicht in irgendwelchen Stauräumen unterbringbar ist. Ein derartiger Stauraum kann beispielsweise auch der Kielraum 12 sein.

Der Schnitt III-III ist so angelegt, dass die Tür 28 von aussen sichtbar ist. Diese Tür ist in ihrem lichten Durchgang unten durch die Schwelle 11 begrenzt und oben durch einen Sturz 29, der bei zusammengeklapptem Boot in etwa durch die Lage der Schwelle 11 des Schwenkteiles bestimmt wird.

In Fig. 4 ist schematisch eine Servovorrichtung 30 zur Erleichterung der Klappbewegung dargestellt. In dieser schematischen Darstellung greift ein in Rollen 31 geführtes Seil 32, das durch eine Feder 33 belastet ist, an dem Ende eines Hebels 34 an, der andererseits mit dem Schwenkteil 1 verbunden ist. Die Feder 33 ist immer dann gespannt, wenn das Klappboot, wie gestrichelt dargestellt, entweder zusammen- oder ausgeklappt ist. In der mit durchgezogenen Linien dargestellten Stellung ist die Feder 33 weitgehend entspannt, und das Schwenkteil 1 ist bezüglich des Lagers 10 weitgehend im Gleichgewicht. Hierdurch ist es möglich, den Klappvorgang des Bootes ohne körperliche Anstrengung durchzuführen. Derartige, die Massen kompensierende Speichervorrichtungen werden beispielsweise bei Garagentoren, die als Kipptore ausgebildet sind, verwendet. Um gegen Witterungseinflüsse unempfindlich zu sein, empfiehlt sich hier die Verwendung von Gasspeichern.

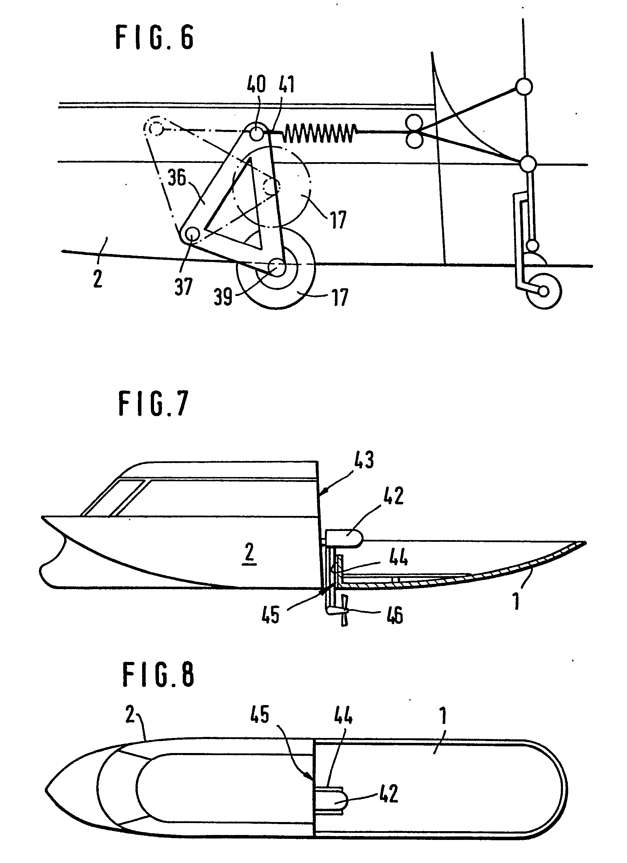

In Fig. 5 ist vereinfacht ein Fahrgestell dargestellt, das unmittelbar mit den Fahrzeugteilen verbunden ist und für den Wasserbetrieb «eingezogen» wird. Die Radaufhängung 35 der Räder 17 ist hier zur Prinziperläuterung lediglich wie eine Kurbel dargestellt, deren eines Ende als Radachse und anderes Ende als Schwenkachse dient. Wie so ein Fahrwerk aussehen könnte, ist in Fig. 6 dargestellt. Ein Dreieckslenker 36 ist bei 37 an einer Halterung schwenkbar gelagert, welche wiederum am Bootskörper 2 befestigt ist. Das Rad 17 ist am Dreieckspunkt 39 gelagert. Am dritten Dreieckspunkt 40 greift ein Zugsystem 41 an, mit dem zum Einfahren des Rades 17 der Punkt 40 nach links verschoben wird, wodurch das Rad 17 die gestrichelt dargestellte Stellung einnimmt, für die das Fahrwerk voll eingezogen ist. Diese Fahrwerkeinzugsvorrichtung kann gekoppelt sein mit der Kräfteausgleichvorrichtung (Kräftespeichersystem) 30 der Klappvorrichtung (Fig. 4). Hierdurch würde das Fahrwerk immer dann ausgefahren werden, wenn das Klappboot zusammengeklappt wird, und es würde das Fahrwerk eingefahren werden, wenn das Schwenkteil für den Bootsgebrauch ausgeschwenkt würde.

In den Figuren 7 und 8 ist die Anordnung eines Bootsmotors dargestellt. Der Bootsmotor 42 ist als Mittelmotor an der rückseitigen Stirnseite 43 des Fahrzeugteils 2 befestigt (siehe auch Fig. 3). In zusammengeklapptem Zustand des Bootes ist somit der Motor 42 von aussen sehr gut zugänglich. Um das Klappen ungestört durchzuführen, ist am Heckteil 1 eine entsprechende Einbuchtung 44 auf der Klappstirnfläche 45 vorgesehen, so dass sich in auseinandergeklapptem Zustand des Bootes ein senkrechter Schacht ergibt. Der Motor 42 kann in der Höhe an einer Stange 47 verstellt werden, so dass ebenfalls die Schiffsschraube 46 einen mehr oder weniger grossen Tiefgang hat. Dies kann besonders bei flachen Gewässern von Bedeutung sein, wenn vermieden werden soll, dass die Schraube auf Grund läuft. Ausserdem wird für den Strassenverkehr bei zusammengeklapptem Boot der Motor 42 möglichst hoch angeordnet, zur Vermeidung irgendwelcher Beschädigungen. Der Motor kann auch durch nicht dargestellte Mittel zusätzlich mit einer Schutzhülle versehen werden, die auch die Schraube abdeckt. Der Mittelmotor hat in jedem Fall den grossen Vorteil, dass das Boot wesentlich manövrierfähiger ist, als Boote mit Heckmotoren. Wird beispielsweise die Schiffsschraube 46 quer zur Schiffslängsachse gedreht, so kann das Boot senkrecht zum Ufer an- oder ablegen. Gemäss einer nicht dargestellten Ausgestaltung ist es auch denkbar, dass durch den Motor zwei Schrauben angetrieben werden, die beispielsweise in den Kanalmulden (Fig. 2, 3) arbeiten. Als Bootsmotor 42 kann ein üblicher Aussenbordmotor dienen.

Neben dem Motor kann an der Stirnseite 43 des Fahrzeugteils ein Werkzeug- oder Verstaukasten 48 angebracht werden, der im aufgeklappten oder zugeklappten Bootszustand stets zugänglich ist (vergleiche Fig. 3).

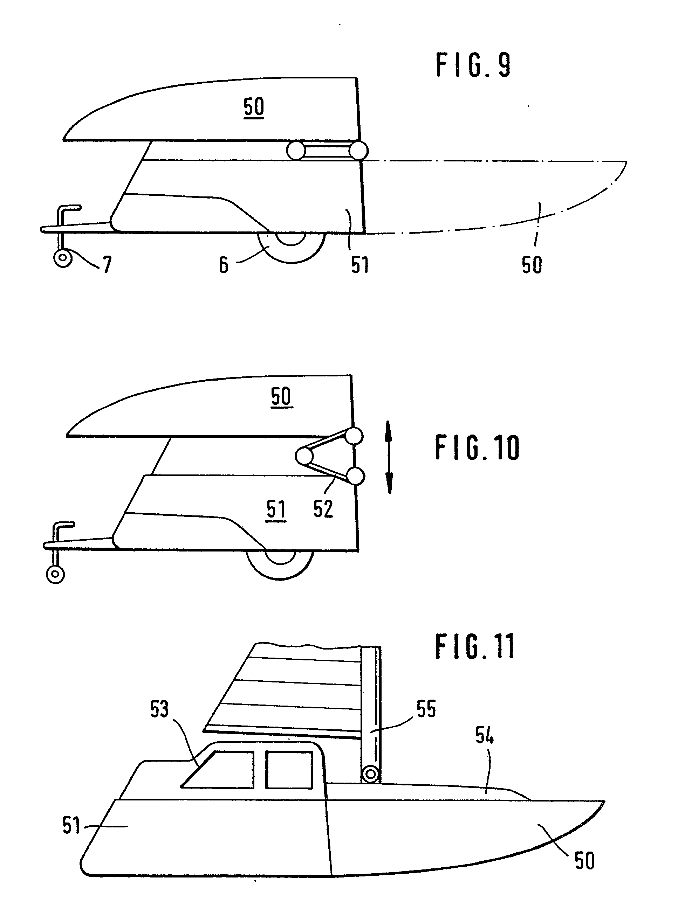

In den Figuren 9 bis 11 ist das zweite Ausführungsbeispiel dargestellt, bei welchem das Bugteil 50 als Schwenkteil über das Heckteil 51 klappbar ist. Das Heckteil 51 dient dann als Fahrzeugteil mit Fahrwerk 6 und Deichsel 7. Bei diesem zweiten Ausführungsbeispiel ist für das Boot betrachtet der Schwerpunkt weiter hinten gelegen als beim ersten Ausführungsbeispiel. Dies kann für den jeweiligen Verwendungszweck wichtig sein, beispielsweise für die Verwendung als Segelboot. Die feste Kajüte ist dadurch im Heck des Bootes angeordnet – der Eingang bleibt in der Mitte. Im übrigen gilt grundsätzlich das für das Beispiel 1 Gesagte, so dass sich nähere Ausführungen erübrigen.

Wenn die Kopffreiheit im als Wohnwagen dienenden Fahrzeugteil 51 nicht ausreichend ist, so kann gemäss einer Ausgestaltung durch eine Scharnierschere 52 das eingeklappte Bugteil 50 angehoben werden. Dieser Anhebvorgang kann beispielsweise für die Benutzung des Fahrzeugteils vorgenommen werden, während im Winter oder auch während der Fahrt das als Dach dienende Schwenkteil 50 wieder abgesenkt ist.

In Fig. 11 ist das zweite Ausführungsbeispiel als Segelboot getakelt dargestellt. Zusätzlich zu dem festen Kajütaufbau 53 auf dem Heckteil 51 ist auch auf dem Bugteil 50 ein leicht demontierbarer Kajütaufbau 54 vorgesehen, der auch zur Halterung des Mastes 55 herangezogen wird. Dieser Kajütaufbau 54 kann so gestaltet sein, dass er für den Transport in den Boden des Schwenkteiles 50 umgekehrt gelegt wird, so dass keinerlei Transportprobleme bestehen. Letzteres gilt grundsätzlich für alle zu demontierenden Teile, die bei geschickter Gestaltung entsprechend in den Bootssegmenten untergebracht werden können.

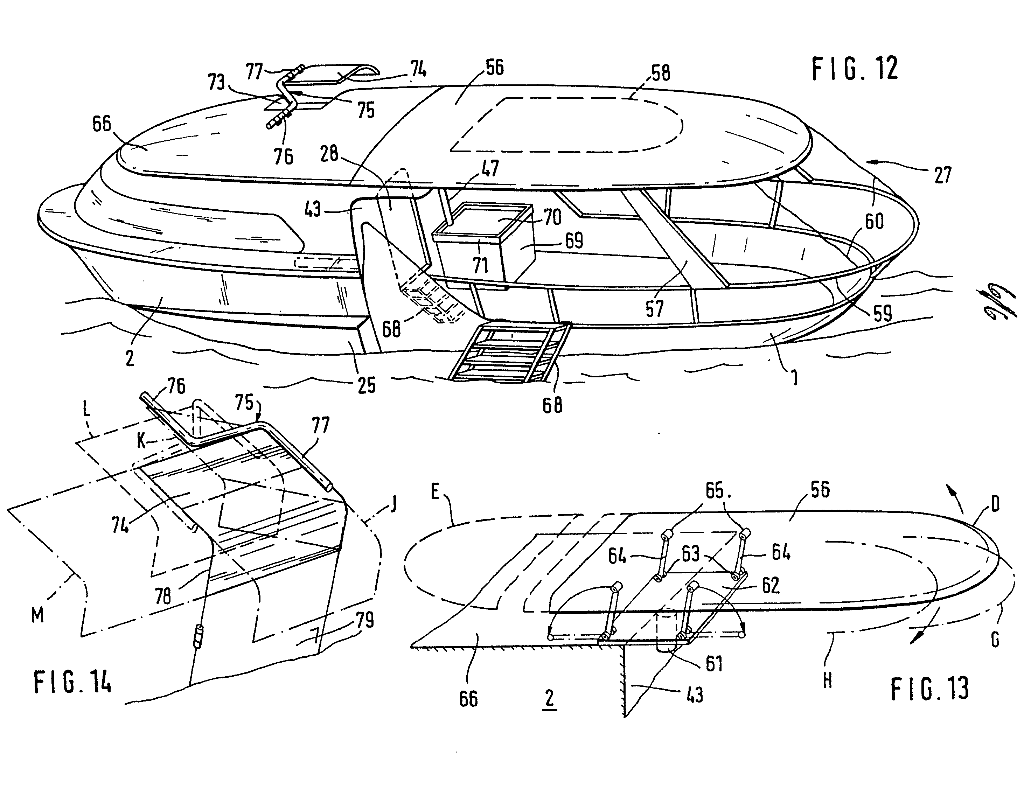

In Fig. 12 ist das erste in den Fig. 1–8 dargestellte Ausführungsbeispiel in perspektivischer Ansicht gezeigt und zwar in ausgeklapptem Zustand, mit einem Aufbaudach über dem Heckteil und auf dem Wasser schwimmend. Im aufgeklappten Zustand wirken die Bugsektion 2 mit Schürzen 25 und die Hecksektion 1 wie ein einteiliges Boot. Dieser Eindruck wird verstärkt, wenn das Dach 56 des Aufbaues 27 über dem Heckteil 1 aus stabilem Material wie bei der in Fig. 12 gezeigten Variante hergestellt wird. Das Problem besteht dann darin, dieses stabile Dach 56 so zu gestalten, dass es bei zusammengeklapptem Zustand des Bootes ohne zu hindern transportierbar ist. Erfindungsgemäss wird dies dadurch erreicht, dass es in der Form dem Fahrzeugdach angepasst wird und für den Strassentransport auf diesem liegt, bevor dann die Heckpartie über alles geschwenkt wird. Für den Aufbau auf Wasser wird dann dieses Aufbaudach 56 um 180 Grad in der Ebene verdreht montiert, nämlich in eine Lage, wie es in Fig. 12 dargestellt ist. Durch zusätzliche Stützen 57 kann diese Lage gesichert werden. Es ist auch denkbar, dass beispielsweise im mittleren Bereich dieses Aufbaudaches, wie gestrichelt dargestellt, Ausnehmungen 58 vorgesehen sind, die einen Sonneneinfall ermöglichen. Auch zwischen Aufbaudach 56 und Reling 59 können Textilverkleidungen 60 vorgesehen sein, ähnlich wie sie auch zwischen Heckschale 1 und Reling 59 eingesetzt sein können.

In Fig. 13 ist gezeigt, wie der Mechanismus aussehen kann, mit dem die 180 Grad Schwenkbewegung des Aufbaudaches 56 vorgenommen werden kann. Das Aufbaudach 56 ist hier im Röntgenblick dargestellt (es könnte jedoch auch angenommen werden, dass es aus durchsichtigem Material besteht) nämlich um hier den Mechanismus besser zeigen zu können. In der Stirnwand 43 des Fahrzeugteils 2 ist eine nichtgezeigte Buchse angeordnet, in der ein Rohr 61 drehbar gelagert ist. An der einen Stirnseite des Rohres 61 ist eine Grundplatte 62 senkrecht zur Rohrachse befestigt, an deren vier Ecken Scharniere 63 für Hebel 64 angeordnet sind, die an ihrem anderen Ende ebenfalls über Scharniere 65 mit der Aufbaudachplatte 56 verbunden sind. Diese Scharniere 63 und 65 bilden mit der Platte 62 und dem Aufbaudach 56 ein Parallelogramm, was ein Anheben des Daches in die gezeigte ausgezogene Lage ermöglicht. Über das Rohr 61 lässt sich nun die Platte 62 und damit das Aufbaudach 56 in der jeweils eingenommenen Ebene des Daches 56 verdrehen. Hierdurch ist es möglich, dass das Aufbaudach 56 in stabiler Weise parallel anhebbar und von der einen Lage (für Heckteilaufbau) in die andere Lage (für Strassentransport) verdrehbar ist. In Fig. 13 entspricht die Darstellung mit durchgezogener Linie D der, bei der die Heckpartie überdacht ist, und in gestrichelter Linie E der für den Strassentransport. Das Dach wird aus der Lage D in die Lage E um 180 Grad geschwenkt und dann über die Hebel 64 auf das Dach 66 des Fahrzeugteils abgesenkt.

Ein weiterer Vorteil des Parallelogrammechanismus besteht darin, dass auch in Stellung für Überdeckung des Heckteiles zwei Versionen möglich sind. In der einen G-strichpunktiert dargestellten werden die Hebel 64 nach rechts geklappt, wodurch die weitmöglichste Überdeckung des Heckteils durch das Aufbaudach 56 gegeben ist. Wenn hingegen die Hebel 64 in der Darstellung nach links geschwenkt werden, ergibt sich die Überdeckung H-strichpunktiert mit zwei Punkten, bei der ein Teil der Heckpartie offenbleibt. Je nach Gestaltung und Gewicht des Daches ist die beschriebene Verstellung verhältnismässig leicht durchzuführen, auch bei störenden Winden.

In Fig. 12 sind zwei weitere wichtige Details der Erfindung dargestellt. Das eine ist eine Leiter 68, die als Parallelogrammleiter ausgeführt am Bord der Hecksektion 1 eingehängt dargestellt ist. In der dargestellten Funktion dient diese Leiter, um vom Schiff möglichst einfach ins Wasser zu kommen, bzw. vom Wasser ins Schiff zu gelangen. Sie kann aber auch, wenn das Boot aufgeklappt auf einem Campingplatz aufgestellt ist, dazu dienen, vom Boden in den «Wohnwagen» zu gelangen. Sie kann aber auch – wie gestrichelt angedeutet – als Leiter dienen, um bei zusammengeklapptem Boot in den Fahrzeugteil durch die Tür 28 zu gelangen. Hierfür wird sie dann an der Stirnseite 43 angelehnt und stellt sich dank der Parallelogrammfunktion auf unterschiedliche Höhen ein. Derartige Leitern werden serienmässig hergestellt. Das andere wichtige Detail ist eine Verkleidungsbox 69 des Motors. Diese Verkleidungsbox 69 ist als Tisch benutzbar mit einer Fläche 70, die durch Leisten 71 umrahmt ist, wodurch ein Herunterrutschen von Gegenständen bei Schräglage der Fläche 70 verhindert wird.

Im Dach 66 des Fahrzeugteils 2 ist auf der rechten Seite in Fahrtrichtung gesehen eine Cockpitöffnung 73 vorgesehen, die durch einen Deckel 74 verschliessbar ist. Hierbei nimmt die Cockpitöffnung 73 einen Teil vom waagrechten Teil des Daches und einen Teil des senkrechten Teils ein. Zwischen Dach 66 und Deckel 74 ist ein kurbelförmig ausgebildeter Hebel 75 angeordnet, der als Verstellscharnier zwischen den beiden Elementen dient. Die eine Achse 76 in dieser Kurbel 75 ist in einem Rohr drehbar eingesetzt, welches im Dach 66 des Fahrzeugteils eingebaut ist. Statt einem Rohr können auch Lagermuffen dienen, die am Dach befestigt sind. Über nichtdargestellte willkürlich betätigbare Feststellteile kann die Achse 76 in der jeweiligen Drehlage festgestellt werden. Die Achse 76 ist in etwa quer zur Schiffsachse gelagert, wobei etwa mittig von der Längsseite des Fensters diese ihre Drehachse hat. Die andere Achse 77 dieser Kurbel 75 ist in gleicher Weise und ebenfalls durch nichtdargestellte Mittel feststellbar mit dem Deckel 74 verbunden. Bei dieser Lagerstelle kann jedoch ausser einer Drehbewegung auch eine Verschiebung der Platte 74 in Richtung der Achse 77 auf dieser erfolgen. Beide Lagerstellen sind in einer gewissen Hinsicht selbsthängend ausgebildet, damit bei der Einstellung und vor Festspannen nach Wahl der Stellung ein gewisses Verharren des Deckels 74 in der gewählten Stellung gegeben ist. Unter dem Cockpit 73 ist ein Steuerstand vorgesehen.

In Fig. 14 ist gezeigt, welche Stellungen beispielsweise der Deckel 74 mittels dieses Kurbelscharniers 75 einnehmen kann. Durchgezogen ist die Stellung dargestellt, bei der der Deckel 74 die Öffnung 73 verschliesst. In dieser Stellung kann beispielsweise durch den senkrechten Abschnitt 78 dieses Deckels 74 eine Tür 79 verriegelt werden, deren Breite der Länge des Cockpitdeckels entspricht und dessen senkrechter Abschnitt 78 mit seinem Endabschnitt über diese Tür 79 in der Bordwand greift. Die Tür 79 hat den grossen Vorteil, dass, wenn beispielsweise das Schiff weitgehend angelegt hat, der Schiffer hier heraustreten kann, um das Boot zu vertäuen. Mit I ist die Lage des Deckels 74 dargestellt, in der er lediglich nach bezüglich der Bootsachse gesehen rechtsaussen gezogen wird. Hierbei gleitet er auf der Achse 77. Mit K ist die Lage gezeigt, die strichpunktiert dargestellt ist, in der beim Verbleiben der Achse 77 in ihrer Lage lediglich der Deckel 74 um diese Achse gedreht wird, wodurch eine Schrägstellung erfolgt. Dies kann beispielsweise sinnvoll sein, wenn es regnet und dadurch ein gewisser Schutz trotz Sichtmöglichkeit gegeben ist. Mit L ist gestrichelt eine Stellung der Klappe 74 dargestellt, in der diese parallel zum Dach 66 des Fahrzeugteils lediglich nach oben geschoben ist, ähnlich wie es in Fig. 12 gezeigt ist. Hierfür wird die Achse 76 verdreht sowie der Deckel 74 auf der Achse 77. Mit M ist eine weitere Stellung des Deckels 74 gezeigt, bei dem dieser auf dem Dach 66 aufliegt und die Cockpitöffnung 73 vollständig freigibt. Um diese strichpunktiert dargestellte Stellung einzunehmen, wird der Hebel 75 bei Verdrehen der Achse 76 entgegen der Fahrtrichtung des Bootes so weit wie möglich verdreht. Auch der Deckel 74 wird entsprechend auf der Achse 77 verdreht. Der Deckel 74 kann auch – wie nicht dargestellt – lediglich als Rahmen dienen, in dem eine durchsichtige Scheibe angeordnet ist.

## Patentansprüche

1. Klappboot mit einer Bug- und einer Hecksektion, von denen eine Sektion als Schwenkteil mittels einer Klappachse (10) über die andere als Fahrzeugteil dienende und für den Überlandverkehr mit einem Fahrwerk ausstattbare Sektion klappbar ist, wobei das Klappboot mindestens in zusammengeklapptem Zustand des Bootes einen umschlossenen Raum mit dem Schwenkteil (1, 50) als Dach aufweist, dadurch gekennzeichnet, dass die Bug- und Hecksektion (2, 1) im zusammengeklappten Zustand einen Raum von der Grösse eines Wohn- und Schlafraumes umschliessen, die sich durch die Teilungsebene des Bootes ergebenden Flächen von Fahrzeugteil (2, 51) und Schwenkteil (1, 50) die rückseitige Stirnwand des Raumes bilden und dass in dieser Stirnwand ein Eingang (8, 28) für den Raum angeordnet ist.

2. Klappboot nach Anspruch 1, dadurch gekennzeichnet, dass auf den Fahrzeugteil (2, 51) der Aufbau (5, 53) in leichter Bauweise vorgenommen ist und dass das Schwenkteil (1, 50) als stabiles, gegen Einbruch sicherndes zweites Dach dienen kann.

3. Klappboot nach Anspruch 1 oder 2, dadurch gekennzeichnet, dass im Fahrzeugteilaufbau Fenster (5) und/oder Lüftungsöffnungen vorgesehen sind, denen im zusammengeklappten Zustand des Bootes Öffnungen, Fenster (13) oder Bordtüren der Wände des Schwenkteils (1) gegenüberliegen.

4. Klappboot nach einem der vorhergehenden Ansprüche, dadurch gekennzeichnet, dass Bug- und Hecksektion auf Grundschalen aufgebaut sind, und dass die Höhe der Rumpfschale des Fahrzeugheckteils (2) höher ist als die des Schwenkteils.

5. Klappboot nach einem der vorhergehenden Ansprüche, dadurch gekennzeichnet, dass eine Leiter (68) mit Parallelogrammverstellung durch Anbringung an verschiedene Stellen als Eingangsleiter für das Fahrzeugteil (2), für das Schwenkteil (1) (beispielsweise vom Wasser aus) oder als Tür (voll flachgezogenes Parallelogramm), bzw. Fensterladen dienen kann.

6. Klappboot nach einem der vorhergehenden Ansprüche, dadurch gekennzeichnet, dass die Hecksektion (1) als Schwenkteil dient (Fig. 1 bis 8).

7. Klappboot nach einem der Ansprüche 1 bis 5, dadurch gekennzeichnet, dass die Bugsektion (50) als Schwenkteil dient (Fig. 9 bis 11).

8. Klappboot nach einem der vorhergehenden Ansprüche, dadurch gekennzeichnet, dass auf dem Schwenkteil (1, 50) in ausgeklapptem Zustand des Bootes ein Aufbau (27, 54) montierbar ist.

9. Klappboot nach Anspruch 8, dadurch gekennzeichnet, dass der Aufbau (27) ein Dach in Form eines Kajütdaches hat, das zur Reling (59) bzw. dem Bord des Schwenkteils (1) eine Verbindung (57, 60) aufweist.

10. Klappboot nach Anspruch 9, dadurch gekennzeichnet, dass als Verbindung Stützen (57) dienen und zwischen Aufbaudach (56) und Reling (59) bzw. Reling und Bord des Schwenkteils (1) zeltartige Füllteile (60) vorsehbar sind.

11. Klappboot nach Anspruch 8 oder 9, dadurch gekennzeichnet, dass das Aufbaudach (56) stabil ausgeführt eine dem Dach (66) des Fahrzeugteils angepasste Form aufweist, bei zugeklapptem Zustand des Bootes zwischen dem Fahrzeugteildach (66) und Bootsschale (1) des Schwenkteiles angeordnet ist und das bei aufgeklapptem Zustand dieses Aufbaudach (56) nach Anheben und Drehen um 180 Grad in einer Ebene in die über das Schwenkteil (1) ragende Lage gelangt.

12. Klappboot nach Anspruch 11, dadurch gekennzeichnet, dass zum Anheben ein das Aufbaudach (56) parallel zu seiner Lage höhenverstellendes Parallelogramm (62–65) dient, das auf der einen Befestigungsseite (Aufbaudach (56) oder Fahrzeugteildach (66) ) ein Drehscharnier (61) für die Horizontalschwenkung aufweist.

13. Klappboot nach einem der vorhergehenden Ansprüche, dadurch gekennzeichnet, dass im Fahrzeugteildach (66) eine Cockpitöffnung (73) mit einem durch eine Vorrichtung (75) in verschiedene Lagen stellbaren Deckel (74) vorgesehen ist, wobei die Verstellvorrichtung mit einer Kurbel arbeitet, deren Achsen (76, 77) in Drehlagern des Fahrzeugteildaches (66) bzw. des Deckels (74) arbeiten und dort festspannbar sind, so dass der Deckel (74) bezüglich des Daches (66) angehoben, mit oder gegen die Fahrtrichtung schräggestellt, seitlich verschoben oder flach nach hinten weggeklappt werden kann.

14. Klappboot nach Anspruch 13, dadurch gekennzeichnet, dass unter der Cockpitöffnung (73) im Fahrzeugteil (2) ein Steuerstand mit Steuerruder angeordnet ist und dass eine von dort nach aussen führende Tür (79) durch den Deckel (74) in dessen Schliessstellung zusätzlich verriegelbar ist.

15. Klappboot nach Anspruch 13 oder 14, dadurch gekennzeichnet, dass der Deckel (74) eine Winkelform hat und mit einem Schenkel über das Dach (66), mit dem anderen Schenkel (78) einen seitlich des Bootes gelegenen Abschnitt der Cockpitöffnung (73) abdeckt.

16. Klappboot nach einem der vorhergehenden Ansprüche, dadurch gekennzeichnet, dass der Bug eine für ein Segelboot geeignete Form hat und dass auf einer der Sektionen (50, 51) ein Mast (55) mit Segeltakelage montierbar ist.

17. Klappboot nach einem der vorhergehenden Ansprüche, dadurch gekennzeichnet, dass die Fahrzeugdeichsel (7) auf der der Eingangstür (8) abgewandten Seite vorgesehen ist.

18. Klappboot nach einem der vorhergehenden Ansprüche, dadurch gekennzeichnet, dass die Räder (17) schwenkbar am Fahrzeugteil (2) befestigt sind und während des Schiffsbetriebs innerhalb entsprechender Radkästen (26) (Kanalmulden) bis oberhalb des Wasserspiegels einziehbar (schwenkbar) sind. (Fig. 5 und 6).

19. Klappboot, insbesondere nach Anspruch 18, dadurch gekennzeichnet, dass die Radschwenkbewegung an die Bootsklappbewegung gekoppelt ist.

20. Klappboot nach Anspruch 18, dadurch gekennzeichnet, dass durch eine Mitnahme- und Entriegelungsvorrichtung die Räder (17) während der zweiten Hälfte der Ausklappbewegung ein- bzw. ausgeschwenkt werden.

21. Klappboot nach einem der Ansprüche 1 bis 17, dadurch gekennzeichnet, dass für den Landtransport ein dem Rumpf des Fahrzeugteils (2) angepasstes Fahrgestell (14) mit Rädern (17) und Deichsel (7) vorgesehen ist.

22. Klappboot, nach einem der vorhergehenden Ansprüche, dadurch gekennzeichnet, dass am Fahrzeugteil (2) bezüglich des Fahrgestells (16) in Richtungsteilungsebene ein Hilfsfahrwerk (19) vorgesehen ist, dessen Angriffspunkt am Boot dem sich bei ausgeklapptem Boot ergebenden Schwerpunkt näher ist als der Angriffspunkt des Fahrgestells (16) am Boot.

23. Klappboot nach Anspruch 22, dadurch gekennzeichnet, dass das Hilfsfahrwerk (19) einziehbar, jedoch ungefedert und unbremsbar ist.

24. Klappboot nach Anspruch 22 oder 23, dadurch gekennzeichnet, dass das Hilfsfahrwerk (19) ein Laufwerk (20) aufweist, das an einem verriegelbaren Hebel angeordnet ist, der in oder gegen Fahrtrichtung schwenkbar ist.

25. Klappboot nach Anspruch 24, dadurch gekennzeichnet, dass der Hebel durch ein innerhalb und ausserhalb des Fahrzeugteils (2) einsetzbares Werkzeug (Kurbel) betätigbar ist.

26. Klappboot nach Ansprüchen 22 bis 25, dadurch gekennzeichnet, dass das Hilfsfahrwerk (19) ein Laufwerk aus mehreren mit einer Laufkette (21) (Laufband) umgebenen Rollen (20) (Raupe) aufweist.

27. Klappboot, nach einem der vorhergehenden Ansprüche, dadurch gekennzeichnet, dass mindestens im Fahrzeugteil (2) im wassergängigen Bootsrumpf in Bootslängsrichtung verlaufende Kanalmulden (26) (Strömungskanäle) vorgesehen sind, die zur Aufnahme der Fahrvorrichtungen (Fahrgestell (16), Hilfsfahrwerk (19) ) dienen.

28. Klappboot nach Anspruch 27, dadurch gekennzeichnet, dass durch die Strömungskanäle (26) der Rumpf zu einem Trimaran wird.

29. Klappboot nach Anspruch 28, dadurch gekennzeichnet, dass der Bug (22) des mittleren Rumpfes (Hauptrumpfes) einen sich in Fahrtrichtung ausdehnenden wellenunterschneidenden Wulst aufweist.

30. Klappboot nach Anspruch 29, dadurch gekennzeichnet, dass die als Stützrümpfe bestimmter Breite ausgebildeten Seitenrümpfe (25) an dem Hauptrumpf demontierbar befestigt sind.

31. Klappboot nach Anspruch 30, dadurch gekennzeichnet, dass die Seitenrümpfe (25) als Nutzbehälter dienen.

32. Klappboot, nach einem der vorhergehenden Ansprüche, dadurch gekennzeichnet, dass ein Antriebsaggregat (42) (Bootsmotor) mittschiffs angeordnet ist, das bei zusammengeklapptem Boot an der rückseitigen Stirnseite (43) des Fahrzeugteils zugänglich ist (Fig. 8).

33. Klappboot nach Anspruch 32, dadurch gekennzeichnet, dass das Aggregat (42) durch eine am Fahrzeugteil (2) befestigbare Hülle schützbar ist.

34. Klappboot nach Anspruch 33, dadurch gekennzeichnet, dass als Hülle eine feste Haube (69) dient, die als Tisch (70) mit abrutschverhinderndem Rand (71) ausgebildet ist.

35. Klappboot nach einem der Ansprüche 32 bis 34, dadurch gekennzeichnet, dass als Aggregat (42) mindestens ein üblicher Aussenbordmotor mit anmontierter Schiffsschraube (46) dient.

36. Klappboot nach Anspruch 35, dadurch gekennzeichnet, dass Motor (42) mit Schraube (46) in der Höhe und damit Tauchtiefe verstellbar ist.

37. Klappboot nach einem der Ansprüche 32 bis 36, dadurch gekennzeichnet, dass für das Aggregat (42, 46) als Verbindung ins Wasser ein senkrechter Schacht (44) dient, in den die Schiffsschraube vorzugsweise durch Höhenverstellung des Motors (42) hineinziehbar ist.

38. Klappboot nach Anspruch 37, dadurch gekennzeichnet, dass sich der Schacht (44) zwischen den beiden Bootssektionen (1, 2) bildet, indem mindestens in einer der bei aufgeklapptem Bootszustand einander gegenüberliegenden Stirnwände eine entsprechende Einbuchtung (44) vorgesehen ist.

39. Klappboot nach einem der Ansprüche 32 bis 38, dadurch gekennzeichnet, dass die Schiffsschraube (46) während des Betriebs einen vorzugsweise nach unten offenen, im Bootsboden angeordneten Tunnel (Kanalmulde 26) taucht, in den vorzugsweise der senkrechte Schacht (44) mündet.

40. Klappboot nach Anspruch 39, dadurch gekennzeichnet, dass zwei Schrauben (46) vorgesehen sind, die in unabhängigen Tunneln (Kanalmulden 26) arbeiten (nicht dargestellt).

41. Klappboot nach einem der vorhergehenden Ansprüche, dadurch gekennzeichnet, dass an der rückseitigen Stirnseite (43) des Fahrzeugteils (2) oberhalb des Schwenkteils (1) mindestens ein in beiden Schwenkendlagen zugänglicher Verstaubehälter (48) für beispielsweise Werkzeugkästen angebracht ist.

42. Klappboot, nach einem der vorhergehenden Ansprüche, dadurch gekennzeichnet, dass zum Ausgleich der abhängig von der Kipplage sich ändernden Schwenkteilmasse ein dieses Masse weitgehend kompensierendes Federsystem (31–34) an den Sektionen angreift. (Fig. 4).

43. Klappboot nach Anspruch 42, dadurch gekennzeichnet, dass das Federsystem vorzugsweise mit Gasfedern arbeitet.

44. Klappboot nach Anspruch 42 oder 43, dadurch gekennzeichnet, dass die Federkraft bei bezüglich der Kippachse weitgehend kippkräftefreier Stellung am geringsten und bei zusammen- bzw. ausgeklappter Stellung am grössten ist.

45. Klappboot nach einem der Ansprüche 42 bis 44, dadurch gekennzeichnet, dass für den Angriff des Federsystems am Schwenkteil (1) ein als Hebel wirkender Abschnitt (34) vorgesehen ist, der in zusammengeklappter Form des Bootes in eine entsprechende Ausnehmung im Fahrzeugteil (2) taucht.

46. Klappboot nach einem der vorhergehenden Ansprüche, dadurch gekennzeichnet, dass der Drehpunkt der Kippachse (10) in der Höhe – zur Gestaltung der Kopffreiheit – des Raumes änderbar ist (Fig. 9, 10).

47. Klappboot nach einem der vorhergehenden Ansprüche, dadurch gekennzeichnet, dass die Bootsinnenausstattung wie Küchenzeile, Dusche, Toilette, Wohn-/Schlafraum usw. in Form von Modulen besteht, die zwischen Schwimmschale und Dach eingepasst und nach Bedarf unterschiedlich auswählbar sind.

**Revendications**

1. Bateau pliable comportant une section de proue et une section de poupe, l'une de ces sections qui constitue la partie pivotante pouvant être rabattue grâce à un axe de rabattement (10) sur l'autre section qui constitue la partie formant véhicule et qui, pour la circulation sur route, peut être équipée d'un train de roues, étant entendu que le bateau pliable présente, au moins dans son état replié, un espace clos dont le toit est formé par la partie pivotante (1, 50), caractérisé en ce que la section de proue et la section de poupe (2, 1) délimitent, dans l'état replié, un espace de la grandeur d'une pièce de séjour et de couchage, les surfaces de la partie formant véhicule (2, 51) et de la partie pivotante (1, 50) que forme le plan de division du bateau constituant la paroi d'about postérieure de l'espace et une entrée (8, 28) d'accès au dit espace étant ménagée dans cette paroi d'about.

2. Bateau pliable suivant la revendication 1, caractérisé en ce que la superstructure (5, 53) prévue sur la partie formant véhicule (2, 51) est réalisée sous la forme d'une structure légère, la partie pivotante (1, 50) pouvant servir de second toit stable protégeant contre les effractions.

3. Bateau pliable suivant la revendication 1 ou 2, caractérisé en ce que des fenêtres (5) et/ou des ouvertures de ventilation sont prévues dans la superstructure de la partie formant véhicule, lesquelles, dans l'état replié du bateau, sont disposées en face d'ouvertures, de fenêtres (13) ou de portes de bord des parois de la partie pivotante (1).

4. Bateau pliable suivant l'une quelconque des revendications précédentes, caractérisé en ce que la section de proue et la section de poupe sont bâties sur des coques de base, la hauteur de la coque la partie de proue (2) formant véhicule étant plus élevée que celle de la partie pivotante.

5. Bateau pliable suivant l'une quelconque des revendications précédentes, caractérisé en ce qu'une échelle (68) réglable par parallélogramme peut servir, en étant monté en divers endroits, de marchepied à l'entrée de la partie (2) formant véhicule, d'échelle d'accès pour la partie pivotante (1) (par exemple à partir de l'eau) ou de porte (parallélogramme déployé complètement à plat) ou encore de volet pour une fenêtre).

6. Bateau pliable suivant l'une quelconque des revendications précédentes, caractérisé en ce que la section de poupe (1) forme la partie pivotante (Fig. 1 à 8).

7. Bateau pliable suivant l'une quelconque des revendications précédentes, caractérisé en ce que la section de proue (50) forme la partie pivotante (Fig. 9 à 11).

8. Bateau pliable suivant l'une quelconque des revendications précédentes, caractérisé en ce qu'une superstructure (27, 54) peut être montée sur la partie pivotante (1, 50) dans l'état déployé du bateau.

9. Bateau pliable suivant la revendication 8, caractérisé en ce que la superstructure (27 comporte un toit ayant la forme d'un toit de cabine qui présente une liaison (57, 60) au bastingage (59) ou au bord de la partie pivotante (1).

10. Bateau pliable suivant la revendication 9, caractérisé en ce que des éléments de soutien (57) forment la liaison et des éléments de remplissage formant tente (60) sont prévus entre le toit de la superstructure (56) et le bastingage (59) ou le bastingage et le bord de la partie pivotante (1).

11. Bateau pliable suivant la revendication 8 ou 9, caractérisé en ce que le toit de la superstructure (56) qui est stable présente une forme adaptée au toit (66) de la partie formant véhicule, est disposé, dans l'état replié du bateau, entre le toit (66) de la partie formant véhicule et la coque (1) de la partie pivotante et que, dans l'état déployé de ce toit de la superstructure (56) parvient, après soulèvement et pivotement de 180° dans un plan situé au-dessus de la partie pivotante (1).

12. Bateau pliable suivant la revendication 11, caractérisé en ce que, pour effectuer le soulèvement, il est prévu un parallélogramme (62 à 65) qui déplace le toit (56) en hauteur parallèlement à sa position et qui, d'un côté de fixation (toit de la superstructure (56) ou toit (66) de la partie formant véhicule) présente un pivot (61) pour le pivotement horizontal.

13. Bateau pliable suivant l'une quelconque des revendications précédentes, caractérisé en ce que, dans le toit (66) de la partie formant véhicule est prévue une ouverture de cockpit (73) comportant un capot (74) pouvant être positionné dans diverses positions par un dispositif (75), le dispositif de déplacement fonctionnant au moyen d'une manivelle dont les axes (76, 77) tourillonnent dans des paliers du toit (66) de la partie formant véhicule et du capot (74) et peuvent y être bloqués, de sorte que le capot (74) peut être soulevé par rapport au toit (66), peut être incliné obliquement dans le sens d'avancement ou dans le sens contraire, peut être déplacé latéralement ou peut être rabattu à plat vers l'arrière.

14. Bateau pliable suivant la revendication 13, caractérisé en ce qu'en dessous de l'ouverture de cockpit (73), dans la partie formant véhicule (2), est monté un pupitre de commande avec un gouvernail, une porte (79) allant de cet endroit vers l'extérieur pouvant être bloquée aussi par le capot (74) dans sa position de fermeture.

15. Bateau pliable suivant la revendication 13 ou 14, caractérisé en ce que le capot (74) a une forme angulaire et l'une de ses ailes s'étend au-dessus du toit (66) tandis que son autre aile (78) couvre une section de l'ouverture de cockpit (73) disposée sur le côté du bateau.

16. Bateau pliable suivant l'une quelconque des revendications précédentes, caractérisé en ce que la proue a une forme convenant pour un bateau à voile et un mât (55) avec son gréement peut être monté sur une des sections (50, 51).

17. Bateau pliable suivant l'une quelconque des revendications précédentes, caractérisé en ce que le timon (7) du véhicule est prévu du côté opposé à la porte d'entrée (8).

18. Bateau pliable suivant l'une quelconque des revendications précédentes, caractérisé en ce que les roues (17) sont fixées à la partie (2) formant véhicule de manière à pouvoir pivoter et, pendant les évolutions en bateau, elles peuvent être escamotées (par pivotement) à l'intérieur de logements de roues (26) correspondants (chenaux) jusqu'à un endroit situé au-dessus de la ligne de flottaison (Fig. 5 et 6).

19. Bateau pliable, en particulier suivant la revendication 18, caractérisé en ce que le mouvement de pivotement des roues est couplé au mouvement de pliage du bateau.

20. Bateau pliable suivant la revendication 18, caractérisé en ce qu'un dispositif d'entraînement et de déverrouillage fait pivoter les roues (17) vers l'intérieur ou vers l'extérieur pendant la deuxième moitié du mouvement de déploiement.

21. Bateau pliable suivant l'une quelconque des revendications 1 à 17, caractérisé en ce que pour le transport sur terre, un châssis (14) adapté à la coque de la partie formant véhicule (2), pourvu de roues (17) et d'un timon (7), est prévu.

22. Bateau pliable suivant l'une quelconque des revendications précédentes, caractérisé en ce qu'un train de roulement auxiliaire (19) est prévu sur la partie formant véhicule (2) et est disposé par rapport au train de roues (16) en direction du plan de division du bateau, le point d'attaque du train de roues auxiliaires sur le bateau étant plus proche du centre de gravité du bateau déployé que le point d'attaque du train de roues (16).

23. Bateau pliable suivant la revendication 22, caractérisé en ce que le train de roulement auxiliaire (19) peut être escamoté, mais est dépourvu du suspension et de frein.

24. Bateau pliable suivant la revendication 22 ou 23, caractérisé en ce que le train de roulement auxiliaire (19) présente un dispositif de roulement (20) qui est monté sur un levier verrouillable qui peut pivoter dans le sens de l'avancement ou dans le sens opposé.

25. Bateau pliable suivant la revendication 24, caractérisé en ce que le levier peut être actionné par un outil (manivelle) pouvant être introduit à l'intérieur et à l'extérieur de la partie (2) formant véhicule.

26. Bateau pliable suivant l'une quelconque des revendications 22 à 25, caractérisé en ce que le train de roulement auxiliaire (19) présente un dispositif de roulement formé de plusieurs rouleaux (20) entourés par une chenille (21).

27. Bateau pliable suivant l'une quelconque des revendications précédentes, caractérisé en ce qu'au moins dans la partie formant véhicule (2) sont prévus, dans la coque de bateau qui est destinée à être immergée, des chenaux (26) (canaux d'écoulement) qui s'étendent dans le sens longitudinal du bateau et qui servent à recevoir les dispositifs de roulement (train de roues (16), train de roulement auxiliaire (19) ).

28. Bateau pliable suivant la revendication 28, caractérisé en ce que, par les canaux d'écoulement (26), la coque prend la forme d'un trimaran.

29. Bateau pliable suivant la revendication 28, caractérisé en ce que la proue (22) de la coque médiane (coque principale) présente une protubérance dans le sens d'avancement coupant sous les vagues.

30. Bateau pliable suivant la revendication 29, caractérisé en ce que les coques latérales (25), qui ont la forme de coques d'appui d'une certaine largeur, sont fixées de manière amovible à la coque principale.

31. Bateau pliable suivant la revendication 30, caractérisé en ce que les coques latérales (25) servent de récipients utiles.

32. Bateau pliable suivant l'une quelconque des revendications précédentes, caractérisé en ce qu'un groupe d'entraînement (42) (moteur de bateau) est monté au milieu du bateau, ce groupe étant accessible, lorsque le bateau est plié, par le côté d'about postérieur (43) de la partie formant véhicule (Fig. 8).

33. Bateau pliable suivant la revendication 32, caractérisé en ce que le groupe (42) peut être protégé par une enveloppe pouvant être fixée à la partie formant véhicule (2).

34. Bateau pliable suivant la revendication 33, caractérisé en ce qu'un capot fixe (69) sert d'enveloppe et a la forme d'une table (70) comportant un rebord empêchant les glissements (71).

35. Bateau pliable suivant l'une quelconque des revendications 32 à 34, caractérisé en ce qu'au moins un moteur hors-bord classique sur lequel est montée une hélice marine (46) sert de groupe (42).

36. Bateau pliable suivant la revendication 35, caractérisé en ce que le moteur (42) avec l'hélice (46) est réglable en hauteur et ainsi en profondeur d'immersion.

37. Bateau pliable suivant l'une quelconque des revendications 32 à 36, caractérisé en ce qu'un puits vertical (44) sert pour le groupe (42, 46) de liaison avec l'eau et l'hélice marine peut être rétractée dans ce puits de préférence par un déplacement en hauteur du moteur (42).

38. Bateau pliable suivant la revendication 37, caractérisé en ce que le puits (44) est formé entre les deux sections (1, 2) du bateau par le fait qu'un renfoncement correspondant (44) est prévu, lorsque le bateau est déployé, dans une des parois d'about opposées l'une à l'autre.

39. Bateau pliable suivant l'une quelconque des revendications 32 à 38, caractérisé en ce que l'hélice marine (46), pendant son fonctionnement, est plongée dans un tunnel disposé dans le fond du bateau et ouvert vers le bas (chenal 26), dans lequel le puits vertical (44) s'ouvre de préférence.

40. Bateau pliable suivant la revendication 39, caractérisé en ce que deux hélices (46) sont prévues et fonctionnent dans des tunnels (chenaux 26) indépendants (non représentés).

41. Bateau pliable suivant l'une quelconque des revendications précédentes, caractérisé en ce qu'au niveau de la paroi d'about postérieure (43) de la partie formant véhicule (2), au-dessus de la partie pivotante (1), est prévu au moins un coffre (48) servant, par exemple, de coffre à outils accessible dans les deux positions de pivotement.

42. Bateau pliable suivant l'une quelconque des revendications précédentes, caractérisé en ce que pour équilibrer la masse de la partie pivotante qui varie en fonction de la position de basculement, un système à ressort (31 à 34) compensant largement cette masse est en prise avec les sections (Fig. 4).

43. Bateau pliable suivant la revendication 42, caractérisé en ce que le système à ressort travaille de préférence avec des ressorts à gaz.

44. Bateau pliable suivant la revendication 42 ou 43, caractérisé en ce que la force de ressort est minimum dans le cas de la position largement exempte de force de pivotement par rapport à l'axe de pivotement et est maximum dans le cas de la position repliée ou déployée.

45. Bateau pliable suivant l'une quelconque des revendications 42 à 44, caractérisé en ce que pour l'attaque du système à ressort un élément (34) servant de levier est prévu sur la partie pivotante (1), et s'engage, dans l'état replié du bateau, dans un évidement correspondant prévu dans la section (2) formant véhicule.

46. Bateau pliable suivant l'une quelconque des revendications précédentes, caractérisé en ce que le point de pivotement de l'axe de basculement (10) peut être réglé en hauteur (Fig. 9, 10) pour ménager une garde au-dessus de la tête dans le dit espace.

47. Bateau pliable suivant l'une quelconque des revendications précédentes, caractérisé en ce que l'équipement intérieur du bateau, comme par exemple les éléments de cuisine, la douche, le W.C., les éléments de la pièce de séjour/couchage, etc., ont la forme de modules qui sont logés entre la coque flottante et le toit et peuvent être choisis différents selon les besoins.

**Claims**

1. A folding boat comprising a bow section and a stern section of which one section, as a pivotal portion, can be pivoted by means of a pivot axis (10) over the other section which serves as a vehicle portion and which can be fitted with a travel structure for overland travel, wherein the folding boat, at least in the folded-together condition thereof, has an enclosed space with the pivotal portion (1, 50) as a roof, characterised in that in the folded-together condition the bow and stern sections (2, 1) enclose a space of the size of a living and bed room, the surfaces of the vehicle portion (2, 51) and the pivotal portion (1, 50), which are formed by the plane of separation of the boat, form the rearward end wall of the space, and that an entrance (8, 28) for the space is disposed in said end wall.

2. A folding boat according to claim 1 characterised in that the superstructure (5, 53) is effected in a light construction on the vehicle portion (2, 51) and that the pivotal portion (1, 50) can serve as a stable second roof to safeguard against a break-in.

3. A folding boat according to claim 1 or claim 2 characterised in that windows (5) and/or ventilation openings are provided in the vehicle portion superstructure, and openings, windows (13) or door apertures in the bulwarks of the pivotal portion (1) are disposed in opposite relationship to the windows (5) and/or ventilation openings, in the folded-together condition of the boat.

4. A folding boat according to one of the preceding claims characterised in that the bow and stern sections are built on base shells and that the height of the hull shell of the vehicle stern portion (2) is higher than that of the pivotal portion.

5. A folding boat according to one of the preceding claims characterised in that a ladder (68) with parallel displacement, by virtue of being mounted at different locations, can serve as an entry ladder for the vehicle portion (2), for the pivotal portion (1) (for example from the water) or as a door (parallelogram set completely flat) or a shutter.

6. A folding boat according to one of the preceding claims characterised in that the stern section (1) serves as the pivotal portion (Figures 1 to 8).

7. A folding boat according to one of claims 1 to 5 characterised in that the bow section (50) serves as the pivotal portion (Figures 9 to 11).

8. A folding boat according to one of the preceding claims characterised in that a superstructure (27, 54) can be mounted on the pivotal portion (1, 50) in the unfolded condition of the boat.

9. A folding boat according to claim 8 characterised in that the superstructure (7) has a roof in the form of a cabin roof which has a connection (57, 60) to the rail (59) or the edge of the pivotal portion (1).

10. A folding boat according to claim 9 characterised in that struts (57) serve as the connection and awning-like filling portions (60) can be provided between the superstructure roof (56) and the rail (59) or the rail and the edge of the pivotal portion (1).

11. A folding boat according to claim 8 or claim 9 characterised in that the superstructure roof (56), of a stable construction, is of a form which is adapted to the roof (66) of the vehicle portion, in the folded condition of the boat is disposed between the vehicle portion roof (66) and the boat shell (1) of the pivotal portion and that in the unfolded condition said superstructure roof (56), after being lifted and turned through 180° in one plane, passes into the position of projecting over the pivotal portion (1).

12. A folding boat according to claim 11 characterised in that the lifting operation is carried out by a parallelogram (62–65) which displaces the superstructure roof (56) in respect of height and in parallel relationship to its position, the parallelogram having a rotary hinge (61) for the horizontal pivotal movement on one fixing side (superstructure roof (56) or vehicle portion roof (66) ).

13. A folding boat according to one of the preceding claims characterised in that provided in the vehicle portion roof (66) is a cockpit opening (73) with a cover which can be set in various positions by a device (75), wherein the displacement device operates with a crank whose axes (76, 77) operate in rotary mountings on the vehicle portion roof (66) and the cover (74) respectively and can be clamped fast therein so that the cover (74) can be raised with respect to the roof (66), can be inclined in the direction of travel or in the opposite direction thereto, can be displaced laterally, or can be pivoted away flat in a rearward direction.

14. A folding boat according to claim 13 characterised in that disposed beneath the cockpit opening (73) in the vehicle portion (2) is a control post with control rudder and that a door (79) which leads therefrom to the outside can be additionally locked by the cover (74) in the closed position of the cover.

15. A folding boat according to claim 13 or claim 14 characterised in that the cover (74) is of an angular configuration and with one limb portion covers over the roof (66) while with the other limb portion (78) it covers over a portion of the cockpit opening (73) which is disposed laterally of the boat.

16. A folding boat according to one of the preceding claims characterised in that the bow is of a form suitable for a sailing boat and that a mast (55) with sail rig can be mounted on one of the sections (50, 51).

17. A folding boat according to one of the preceding claims characterised in that the vehicle tow bar (7) is provided on the side remote from the entrance door (8).

18. A folding boat according to one of the preceding claims characterised in that the wheels (17) are fixed pivotally to the vehicle portion (2) and during operation as a boat can be retracted within suitable wheel boxes (26) (channel troughs) to a position above the water level (by a pivotal motion) (Figures 5 and 6).

19. A folding boat in particular according to claim 18 characterised in that the pivotal motion of the wheels is coupled to the folding motion of the boat.

20. A folding boat according to claim 18 characterised in that the wheels (17) are swung in and out during the second half of the unfolding movement by an entrainment and unlocking means.

21. A folding boat according to one of claims 1 to 17 characterised in that a chassis structure (14) which is adapted to the hull of the vehicle portion (2) is provided with wheels (17) and tow bar (7) for on-land transport.

22. A folding boat according to one of the preceding claims characterised in that an auxiliary travel structure (19) is provided on the vehicle portion (2), in relation to the chassis structure (16), in the direction of the plane of division, the point of engagement of said auxiliary travel structure (19) on the boat being closer to the centre of gravity when the boat is unfolded, than the point of engagement of the chassis structure (16) on the boat.

23. A folding boat according to claim 22 characterised in that the auxiliary travel structure (19) can be retracted but is unsprung and cannot be braked.

24. A folding boat according to claim 22 or claim 23 characterised in that the auxiliary travel structure (19) has a running gear (20) which is arranged on a lockable lever which is pivotable in the direction of travel or in the opposite direction thereto.

25. A folding boat according to claim 24 characterised in that the lever can be secured by a tool (crank) which can be inserted within and outside the vehicle portion (2).

26. A folding boat according to claims 22 to 25 characterised in that the auxiliary travel structure (19) has a running gear comprising a plurality of rollers (20) around which passes a running chain (21) (running track) (caterpillar track).

27. A folding boat according to one of the preceding claims characterised in that provided at least in the vehicle portion (2) are channel troughs (26) (flow channels) which extend in the longitudinal direction of the boat in the boat hull which goes in the water, which channel troughs (26) serve to receive the travelling assemblies (chassis structure 16, auxiliary travel structure 19) ).

28. A folding boat according to claim 27 characterised in that the flow channels (26) make the hull into a trimaran.

29. A folding boat according to claim 28 characterised in that the bow (22) of the middle hull (main hull) has a wave-undercutting bulge which increases in the direction of travel.

30. A folding boat according to claim 29 characterised in that the side hulls (25) which are formed as support hulls of given width are dismantleably secured to the main hull.

31. A folding boat according to claim 30 characterised in that the side hulls (25) serve as useful containers.

32. A folding boat according to one of the preceding claims characterised in that a drive assembly (42) (boat engine) is arranged midships, which, in the folded-together condition of the boat, is accessible at the rearward end (43) of the vehicle portion (Figure 8).

33. A folding boat according to claim 32 characterised in that the assembly (42) can be protected by a casing which can be secured to the vehicle portion (2).

34. A folding boat according to claim 33 characterised in that a fixed hood (69) serves as the casing, which hood is formed as a table (70) with a rim (71) for preventing articles from slipping off.

35. A folding boat according to one of claims 32 to 34 characterised in that the assembly (42) is at least one conventional outboard engine with fitted propeller (46).

36. A folding boat according to claim 35 characterised in that the engine (42) with propeller (46) is adjustable in respect of height and thus depth of immersion.

37. A folding boat according to one of claims 32 to 36 characterised in that a vertical shaft (44) serves for the assembly (42, 46) as a communication into the water, wherein the propeller can be retracted into the shaft (44) preferably by vertical displacement of the engine (42).

38. A folding boat according to claim 37 characterised in that the shaft (44) is formed between the two sections (1, 2) of the boat by a suitable recess (44) being provided at least in one of the end walls which are in opposite relationship to each other when the boat is in the unfolded condition.

39. A folding boat according to one of claims 32 to 38 characterised in that, during operation, the propeller (46) engages into a preferably downwardly open tunnel (channel trough 26) in the bottom of the boat and into which the vertical shaft (44) preferably opens.

40. A folding boat according to claim 39 characterised in that there are provided two propellers (46) which operate in independent tunnels (channel troughs 26) (not shown).

41. A folding boat according to one of the preceding claims characterised in that mounted at the rearward end (43) of the vehicle portion (2) above the pivotal portion (1) is at least one stowage container (48), which is accessible in both limit positions of the pivotal movement, for example for tool boxes.

42. A folding boat according to one of the preceding claims characterised in that to compensate for the mass of the pivotal portion which varies in dependence on the pivotal position, a spring system (31–34) for substantially compensating for said mass engages the sections (Figure 4).

43. A folding boat according to claim 42 characterised in that the spring system preferably operates with gas springs.

44. A folding boat according to claim 42 or claim 43 characterised in that the spring force is at its lowest in the position which is substantially free of tilting forces with respect to the tilting axis and is at its greatest in the folded-together or unfolded position.

45. A folding boat according to one of claims 42 to 44 characterised in that a portion (34) which acts as a lever is provided for the engagement of the spring system on the pivotal portion (1), said portion (34) engaging into a corresponding recess in the vehicle portion (2) when the boat is in the folded-together position.

46. A folding boat according to one of the preceding claims characterised in that the centre of rotation of the pivot axis (10) is variable in respect of height of the space, for the amount of headroom (Figures 9 and 10).

47. A folding boat according to one of the preceding claims characterised in that the internal fittings of the boat such as kitchenware, shower, toilet, living/bed room etc is in the form of modules which can be fitted between the roof and the floatation shell and which can be selected to be different as required.

1/6

FIG. 1

FIG.2

FIG.3

29  47  43
28
24
42
26  48
25
23  11  46

FIG.4

1
33  31  10
2
30  32  34

FIG.5

26
35
17

4/6

**FIG.6**

**FIG.7**

**FIG.8**

FIG. 9

50

7    6    51    50

FIG. 10

50

51    52

FIG. 11

53    55

54

51    50

FIG. 12

FIG. 14

FIG. 13